# EUROPEAN PATENT APPLICATION

(11) **EP 3 570 026 A2**
(43) Date of publication of application: **20.11.2019**
(21) Application number: 19174896.1
(22) Date of filing: 16.05.2019
(51) Int. Cl.: G01N 33/38

(54) **METHOD WITH TRACING AGENT FOR DETECTING A QUANTITY OF BUILDING MATERIAL**

(30) Priority: 17.05.2018 DK PA201870304; 17.05.2018 DK PA201870305; 17.05.2018 DK PA201870306
(71) Applicant: KH miljø ApS, 4750 Lundby (DK)
(72) Inventor: Christiansen, Torben, 4230 Skælskør (DK); Hougaard, Thomas, 2100 København Ø (DK)
(74) Representative: AWA Denmark A/S

(57) **Abstract**

The invention relates to a method for tearing down, collecting or cleaning of a building part or material, wherein the method comprises the steps of providing a tracing agent, wherein the tracing agent comprises an amount of a tracer and/or a number of particulate markers, applying the tracing agent onto the building part and/or admixing the tracing agent into the building part, tearing down and/or collecting at least a part of the building part and/or cleaning a surface of the building part, whereby a contaminated product is produced, wherein the contaminated product comprises from 0.0001 to 10 percent by weight of the applied or admixed tracing agent as well as material or residual material, which has been torn down, collected and/or cleaned from the building part, and assigning the contaminated product to a specific building renovation and/or building demolition by means of a detection or reading of the tracing agent in the contaminated product. The invention further relates to a contaminated product, which may be provided by the method.

## Description

The present invention in a first aspect relates to a method for tearing down, collecting or cleaning of a building part or material, and in a second aspect a contaminated product, which may be provided by means of the method according to the first aspect of the invention. The tearing down is performed while applying a tracing agent to enable the detection of a quantity of torn down, collected or cleaned building part or material. The contaminated product consists of a mixture of torn down, collected or cleaned waste and/or residual building material and tracing agent.

Tearing down, collecting or cleaning of a building part or material are mechanical processes often used in renovation or demolition works, wherein removal of a part of or the entire building part is desired with a view to disposal or recycling.

When embarking upon the task, at first typically an assessment of the part to be torn down, collected or cleaned is made to determine which security precautions must be made, the materials that the part consists of, the tools to be employed for the task, as well as how to dispose of the resulting construction waste. Then a programme of work is prepared, and work is commenced. Typically, renovation or tearing down involves the use of abrasive blasting, impact drilling machines, hydraulic and pneumatic hammers and/or machinery provided with clamshells, crushers, shovels, scissors and/or barrels etc., depending on the type and scope of the task. Prior to and/or during the tearing down, atomized water may be sprayed on the part to be removed to minimize the spread of construction dust from the building part.

According to the type of the task at hand, the collection of the building waste may be done continuously, possibly by use of a collecting device making up a part of the demolition tool, or after the commencement of the renovation or tearing down.

As to the disposal of construction waste, strict regulations often apply, stipulating certain procedures for the disposal of the construction waste. Especially this holds true for waste classified as so-called hazardous waste, where often the disposal involves deposition of the waste, which in turn may involve considerable costs and effects harmful to the environment.

Using contemporary methods, it may often prove challenging to follow and ensure that waste is in disposed of in compliance with the stipulated rules.

Waste material from the building industry, notably from renovation works, presently makes up the largest amount of waste within the entire society, and the prospect of enhanced security during waste disposal and the potential reduction of the amount of waste, resources spent on waste disposal, and consumption of materials, may substantially affect the environment as well as the costs of the contractor.

It is an object of the present invention to meet or reduce one or more of the above challenges.

The present invention thus in a first aspect seeks to address one or more of these and/or other objects by the provision of a method for tearing down and/or collecting and/or cleaning of a building part and/or a building material in connection with a specific building renovation and/or demolition, wherein said method comprises the following steps:
providing a tracing agent, wherein the tracing agent comprises a quantity of tracer and/or a number of particulate markers, wherein the tracer, the case being, comprises a different material than the building part or the building material, and/or where the tracer, the case being, possesses at least one traceable physical property, which is different from the corresponding physical property of the building part or the building material, and wherein the particulate markers, the case being, are microparticles, each of which at a surface presents a code inscription or marking, which may be read visually, such as a serial number,
applying the tracing agent to the building part and/or admixing the tracing agent into the building part,
tearing down and/or collecting at least a part of the building part and/or cleaning a surface of the building part, whereby a contaminated product is produced, wherein the contaminated product comprises from 0.0001 to 10 percent by weight of the applied or admixed tracing agent as well as material or residual material torn down, collected and/or cleaned from the building part, and
assigning the contaminated product to said specific building renovation and/or demolition by means of a detection or reading of the tracing agent in the contaminated product.

An advantage of the method according to the first aspect of the invention may be the enablement of the detection of a type of building material in a collected, contaminated product from a demolition or renovation work. It is also made possible to detect a potentially hazardous waste material in the contaminated product. In case of abrasive blasting this may correspondingly enable the determination of the proportion of the blown off material that may comprise potentially hazardous waste material, in the contaminated product. This in turn may present the significant advantage that it is made possible to trace and consequently potentially assure that a contaminated product containing hazardous waste material, is disposed pursuant to the rules stipulated by the authorities. This may involve the additional propitious effect that inspection, authorities or other players are given the possibility of tracing whether the subsequent handling, disposal or use is in compliance with the prevailing provisions, agreements or plans.

This may further entail the advantage of a substantially reduced environmental impact.

An additional advantage may reside in the fact that it is made possible via information associated with the tracing agent to ascertain who, be it a company or a person, holds the responsibility of a contaminated product potentially containing hazardous waste material. This may be in relation to disposal of the contaminated product or in demolition or renovation assignments, wherein more than one demolition or renovation firm are involved, or when encountering a quantity of an unlawfully deposited, dumped or reused contaminated product. This will prove especially pertinent when it comes to hazardous waste.

Yet an advantage may be that the possibility is opened up of using or reusing a substantially larger proportion of the material and/or residual material from a demolition or renovation assignment in the form of a contaminated product for a new construction work or another purpose, as it may henceforth be possible to detect waste substances in the contaminated product at an improved accuracy and enhanced certainty.

An advantage in case cleaning is done by abrasive blasting with a blasting agent may be the enablement of detection of the type of blasting agent or blowing agent in the collected contaminated product. This can be done by assigning a type of blasting agent or blowing agent to a specific tracing agent. Hence, it may be possible to detect the type of blasting agent, e.g. in a quantity of blowing agent, by identification of the tracing agent. Further, this may open up possibilities for reusing the blasting agent or blowing agent for other cleaning jobs.

The term "tearing down" as used in the present application may be taken to mean that the entirety or a part of a building part or a building is destroyed, taken down, demolished and/or separated or demounted with a view to disposal or reuse in another building part or as a building material.

"Cleaning" may comprise that the entirety or parts of a surface or one or more layers of a building part is removed from other parts of the building part with a view to demolition or reuse in another building part or as a building material. This may e.g. comprise abrasion such as abrasive blasting and/or flushing e.g. of a surface of the building part.

"Building material" may alternatively be designated "construction material" and refers to any material, which comprises or may comprise a part of a building part or a building, including concrete or concrete residues, cement, metal, plastic, soil, gravel, stone, wood, brick, plaster, isolation material, paint and paint residues, minerals and compounds hereof, particulate or other support material as e.g. cinder, as used e.g. beneath a ground deck or the like, where the building material potentially must be disposed of as waste and/or for recirculation.

"Material and residual material" may comprise building material.

"Building renovation" or "renovation" may potentially be understood as "tearing down", but parts of the building may well remain after the renovation with the intention of reconstruction or amendment of an extant building and/or an extant building part. Cleaning e.g. is typically performed in connection with a renovation.

"Specific" when used with a "building renovation and/or building demolition" may refer to an operation at one or more designated building plots, for instance one or more designated construction sites or the like.

"The case being" e.g. in relation to the selection of tracer inclusion in the tracing agent may refer to that case, where the tracer is present in the tracing agent; and the same holds for the particulate markers.

"Applying" relates to any method or procedure by which a particulate or fluid agent may be disposed on a surface, such as by brushing, rolling, spraying, blowing or squeezing.

"Admixing" relates to any method or procedure by which a composition of two products is generated, such as by mixing or stirring the products together.

The term "contaminated product" may here be understood as a product comprising a building material and a tracing agent, including e.g. a product comprising blowing agent with abrasive, and tracer contaminated with or admixed with or comprising a blown off material, and does not necessarily imply that the torn down or removed material, e.g. blown off material, comprises hazardous materials or the like. The removed material may in connection with abrasion blasting comprise the same material as the blowing agent and/or other materials.

A "building part" correspondingly may be understood as a building or a part of a building of any art and/or any type of construction such as for instance a bridge, a road or the like. A building face may correspondingly be understood as a face of such a building or construction as for instance a wall, a partition, a front, a ceiling, a road, a beam, a column, a pillar or a roof.

"Particulate" may be understood as synonym with granular and/or grainy.

"Abrasive" may be understood as an agent used for abrasion blasting of the building part, and/or which has suitable properties to attain the mechanical abrasion aspired to when abrasion blasting the building part.

The abrasive may comprise or substantially consist of one or more materials selected from the group consisting of perlite, silicon carbide, carbogrit (composted and briquetted waste water sludge), steel beads, iron filings, polyurethane sponges with iron filings, nutshells, fruit kernels, dry ice, metal, sand, plastic or minerals. The abrasive may also comprise or consist of other materials than those mentioned.

"Tracer" may be understood as any traceable material, the amount or/and type of which is identifiable by means of a technical method such as e.g. measurement of the double refraction of light, absorption of certain wavelengths of light, radioactivity, colour etc. with the aid of the human eye or another technical method of analysis. A "tracer" may comprise several different tracers, materials, elements etc.

A tracer may in the context of the present invention comprise or be a dye or an abrasive supplied with a dye or admixed with coloured particles, ceramics, glass, coloured glass, metal or minerals as for instance aluminum silicate, flint, quartz, cristobalite, olivine, garnet, corundum, spinel, silicon carbide, fluorescent substance and diamond. Alternatively, a tracer may include a DNA tracer or similar DNA-traceable material, for instance such as presently applied in connection with securing of objects such as cars against theft. In the alternative, a tracer may comprise or consist of other types of materials that are traceable in conjunction with an applied abrasive and/or removed or torn down or blown off material, but must be traceable separately from those.

A "traceable physical property" as used in the present application may be any physical property, which makes it possible to distinguish a tracer from a different material, notably from the abrasive and/or the removed or torn down or blown off material, by use of any suitable method of analysis. The tracer and the material may be of the same material or substantially the same material, for instance such that the tracer hara traceable physical property in the form of a different colour or tint than the material. Other examples of traceable properties are the characteristics of the tracer in relation to double refraction of light compared to the material, the absorption on the part of the tracer of certain wavelengths of light, and the hardness, transparency, size, form, shape etc. of the tracer.

The following table lists a range of selected potentially suitable tracers with indication of Vickers hardness, refractive index and index of double refraction as well as notes setting out selected possibly advantageous properties of the tracers in question.

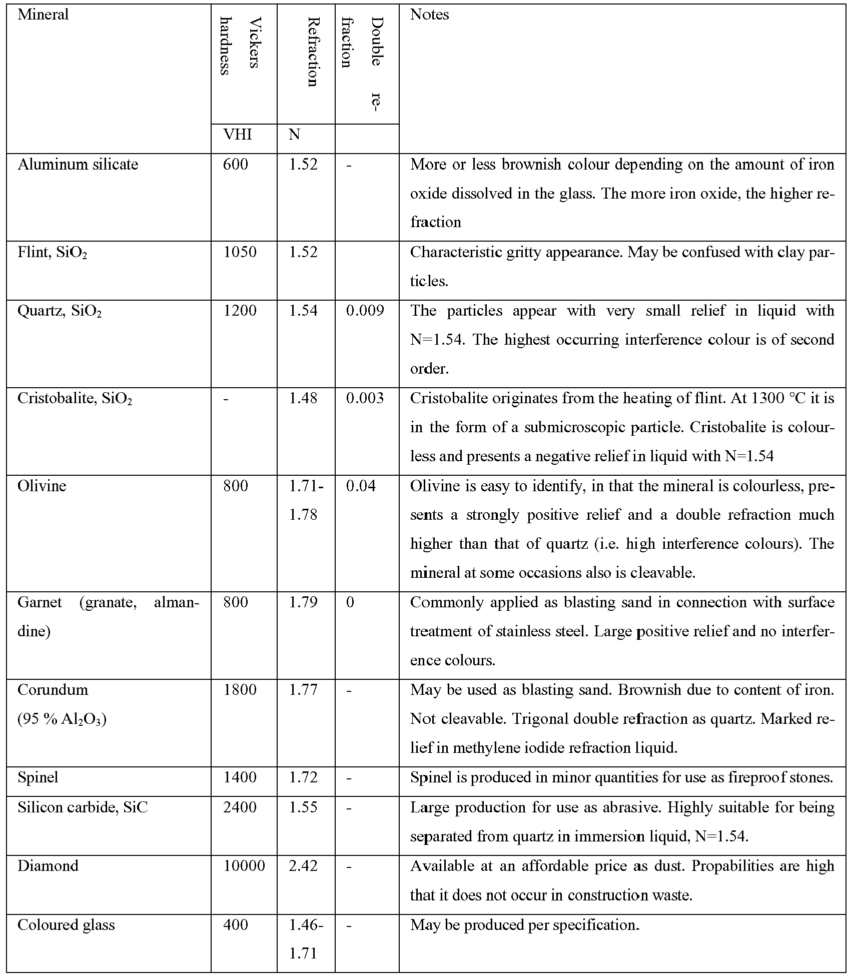

A "blown off material", "cleaned material", "torn down material" and the like may be understood as the material or waste material that has been removed, i.e. blown off, cleaned or torn down, respectively, from a building part in connection with treatment of the building part.

Collection of the contaminated product may be done by sweeping the product in heaps and/or shoveling it up and/or placing it in suitable containers, such as a big bag, and/or aspiring or blowing it to be collected by the aid of a suitable apparatus.

According to one embodiment of the first aspect of the invention, the contaminated product comprises at least 50, 60, 70, 80, 90 or 95 percent by weigh of material or residual material, which has been torn down, collected and/or cleaned from the building part.

According to another or supplementary embodiment, the method in case of tearing down or cleaning further comprises the step of collecting the torn down or cleaned or removed building material. The method may also comprise the additional step of collecting a sample of the contaminated product, e.g. from the collected material, wherein the detection or reading of the tracing agent may be performed on the collected sample of the contaminated product.

In another or supplementary embodiment, the method comprises the step of determining by the aid of the trancing agent, whether a building part is completely torn down or cleaned. An advantage in this regard may be that an internal or external inspection may now control that the tearing down and/or collection and/or cleaning of the building part is performed to completion.

In another or supplementary embodiment the method comprises the step of using the detection of a tracing agent in a contaminated product to sort out the contaminated product and/or determine the method for disposal of a contaminated product, e.g. as hazardous or non-hazardous waste. An advantage in relation hereto may be the enablement of an automatic or semiautomatic sorting and/or disposal of the contaminated product. In addition, it may make possible an easier detection of a potentially hazardous waste material, which may be potentially difficult to identify, in a contaminated product.

In another or supplementary embodiment, the method comprises the additional step of establishing by the use of the tracing agent that at least a part of or a sample of the contaminated product originates from an assigned specific renovation work, and potentially determining an amount of, a type of, a content in and/or composition of the torn down, collected and/or cleaned material in the contaminated product by means of the assignment to the specific building renovation and/or building demolition. Advantageously, it may hereby be possible to establish an amount of hazardous waste substance, which may in turn make it possible to establish the concentration of hazardous waste substance in the contaminated product and thereby classify the waste in accordance with the limit values stipulated by authorities. This may enable a determination of the most suitable method of disposal, which may save costs typically connected to the disposal of hazardous waste, if the concentration of hazardous waste in the contaminated product is below the limit values for hazardous waste set by the authorities.

In another or supplementary embodiment, the method comprises the step of assigning the tracing agent to the specific building renovation and/or building demolition, wherein said step potentially is performed prior to, during or following the step of tearing down and/or collecting and/or cleaning.

In another or supplementary embodiment, the step of assigning the tracing agent to a specific building renovation and/or building demolition comprises booking and/or registering one or more materials present on and/or within the building part and/or building material to be torn down, collected and/or cleaned, and potentially further comprises determining and potentially booking and/or registering a quantitative content of one or more of said materials in said building part and/or building material.

In another or supplementary embodiment, said cleaning of the building part is done by blast abrasion.

In another or supplementary embodiment, the detection of the presence of the tracing agent in the contaminated product is performed by an analysis under a microscope or by means of a chemical identification or a measurement of radioactivity.

In another or supplementary embodiment, the contaminated product comprises at least 50 % material or residual material torn down, collected and/or cleaned from the building part, wherein at least a part of said material or residual material potentially is particulate, potentially having a particle size of 0.002 to 100 mm, and wherein said material or residual material further potentially comprises at least 50 percent by weight of said material or said residual material having a particle size of 0.002 to 100 mm, and/or from 0.0001 to 10 percent by weight of the tracing agent admixed with material or residual material, which has been torn down, collected and/or cleaned from the building part, and/or which is provided on at least one surface of each of a number of particles of said material or residual material, wherein the tracer, the case being, potentially comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond, and other minerals, fluorescent substances and DNA tracer, and/or wherein the tracer, the case being, is particulate and/or in fluid form, and wherein the microparticles, the case being, comprise or substantially consist of a plastic material, and/or wherein the code inscription, the case being, is punched, printed, melted down or engraved into the surface of the microparticles, and/or wherein the code inscription, the case being, comprises one or more signs, digits, letters and/or symbols, and/or wherein the markers, the case being, are laminar, wherein the laminar shape preferably presents a maximum width or length comprised between 0.002 and 10 mm and/or a thickness of 0.002 to 10 mm.

In another or supplementary embodiment, the method comprises that the tracing agent is applied or admixed by spraying the tracing agent onto the building part and/or the building material and/or by manual application, e.g. with paint roller and/or brush, e.g. onto a surface of the building component, and/or a manual pouring and/or application and/or admixing e.g. in particulate building material.

In another or supplementary embodiment, the tracing agent is applied by spraying a transparent binder containing the tracer and able to harden on the treated surfaces, wherein the application may be effected by means of an automatic flushing or spraying device. The application may also or alternatively be performed manually with the aid of a brush or paint roller, wherein the desired tracing agent and additives correspondingly may be mixed with a transparent binder able to harden on the treated surfaces.

In another or supplementary embodiment, the tracing agent is admixed with a particulate material, which subsequently is mixed with the building part and/or the material and/or the residual material. Prior to removal of e.g. a slag layer beneath e.g. a ground deck or the like, there may e.g. be applied a layer, such as a thin layer of e.g. 1 to 20 mm, of the material including the tracing agent on top of the slag layer, after which the material upon removal of the slag layer is admixed with the tracing agent, such as to enable tracing of the resulting contaminated product by means of an analysis of the tracer.

In another aspect, the invention relates to a contaminated product, which may be provided by the method according to one of the preceding claims, wherein the contaminated product comprises
at least 80 % of residues from and/or waste from one or more building materials, wherein at least a proportion of said residues or waste is particulate, having a particle size of 0.002 to 100 mm, and wherein said residues or waste comprises at least 50 percent by weight of the residues or waste having a particle size of 0.002 to 100 mm, and
from 0.0001 to 10 percent by weight of a tracing agent, which is mixed into said residues or waste, and/or which is provided on at least one surface of each of a number of particles of the residues or the waste, wherein the tracing agent comprises an amount of tracer and/or a number of particulate markers, wherein the tracer, the case being, comprises a different material than the building part or the building material, and/or wherein the tracer, the case being, has at least one traceable physical property, which is different from the corresponding physical property of the building part or the building material, wherein the tracer further comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond, and other minerals, fluorescent substances and DNA tracer, and wherein the particulate markers, the case being, are microparticles, each of which on a surface presents a code inscription or marking, which is visually readable, such as a serial number, wherein the microparticles, the case being, further comprises or substantially consists of a plastic material.

In one embodiment, the contaminated product comprises at least 85, 90 or 95 percent by weight of residues and/or waste from one or more building materials, wherein at least a part of the residues or the waste is particulate having a particle size of 0.002 to 100 mm, and wherein the residues or the waste comprises at least 50 percent by weight of the residues or the waste having a particle size of 0.002 to 100 mm.

In a third aspect, the invention relates to use or reuse of the contaminated product for production of a building component or a building material, wherein the contaminated product makes up a part of the produced building component or building material. An advantage obtained by using or reusing the contaminated product may be a reduced environmental impact, both in terms of saving of resources within the building industry and a reduction of the amount of waste material to be deposited and/or disposed of, and time and costs involved herein. Correspondingly, it may enable tracing and/or detecting the origin and/or composition of a material, which has been used or reused for a construction work.

In a fourth aspect, the invention relates to a method for blast abrasion of a building part, such as for blast abrasion of a building face, where the method provides the steps of:
- providing a blowing agent, wherein the blowing agent comprises an amount of predominantly particulate abrasive for abrasion of the building part, and wherein the blowing agent comprises from 0.0001 to 10 percent by weight of particulate markers admixed with the abrasive, wherein the particulate markers are microparticles, each of which has on a surface a code inscription or marking, which may be read visually, such as a serial number,
- abrasive blasting of the surface of the building part with the blowing agent, whereby a contaminated product is produced, wherein the contaminated product comprises at least parts of the blowing agent as well as material blasted by the abrasive blasting from the surface,
- collecting at least parts of the contaminated product, and
- assigning the contaminated product to a particular blasting job by reading of the code inscription or the marking of at least one of the markers.

An advantage of the method according to the invention may be the enablement of a determination of an amount of blown off material in the collected contaminated product from a blasting job. This may correspondingly make it possible to determine the proportion of the blown off material, which may comprise potentially hazardous waste material, in the contaminated product. This in turn may present the substantial advantage that it is possible with sufficient certainty to comply with official provisions regarding classification of the contaminated product in relation to the officially prescribed limit values for hazardous waste. Hence, it may be possible to reuse the contaminated product as a blowing agent in one or more additional blasting jobs, be it on other construction sites, as far as the concentration of hazardous waste in the contaminated product is below the stipulated limits. This may reduce resource use for production of new blowing agent and thereby relieve the environment and concomitantly save time and money for provision and preparation of new blowing agent. Further, a substantially reduced environmental impact can be obtained.

After admixing the markers to the abrasive it may be impossible in practice to remove the markers from the abrasive, whereby secure identification of the abrasive and safety against cheating with the contents of agents and materials in the contaminated product may be achieved.

The particulate markers may be randomly and/or substantially homogenously distributed within the blowing agent.

The term "contaminated product" may her be understood as a product comprising blowing agent with abrasive and particulate markers contaminated with or admixed with a blown off material and does not necessarily imply that the blown off material comprises hazardous materials or the like. The blown off material may comprise the same material as the blowing agent and/or other materials.

A "particulate marker" is any form of marker, which has a code inscription or marking on a surface, which may be visually read, such as a serial number, and the amount or type of which potentially may be identified visually by a technical method such as e.g. by the aid of a microscope and/or the human eye or another technical method of analysis. Particulate markers may potentially comprise several different materials or elements etc. The shape of each marker may e.g. be that of a disc, such as a substantially circular, elliptic, rectangular or quadratic disc, wherein a maxim length and/or width of the disc may be from 5 to 1000 times larger than a thickness of said disc. This relation may be 10 to 500, 20 to 200, or 50 to 100.

The particulate markers are in the form of microparticles. "Microparticles" may be understood as particles of a maximum extension, optionally in height and/or width and/or length, of 0.001 -10 mm. The particulate markers may correspondingly present such a maximum extension of 0.001 to 5, 0.005 to 5, 0.01 to 2, 0.01 to 1, 0.05 to 1, or 0.1 to 1 mm.

One or more of the particulate markers may be provided in the form of so-called "microdots".

Each particulate marker may comprise several identical, possibly parts of several identical, code inscriptions, which may be micro- or nanosized. The microinscription may e.g. be a serial number, and the font size of numbers, letters or other signs in the inscription may be so much smaller than a particle size that it is ensured that substantially all or a major part of the particles will include at least one entire code inscription. Each code inscription may thus present a maximum extension of 0.0001 to 1, 0.0005 to 0.55, 0.001 to 0.2, 0.001 to 0.1, 0.005 to 0.1, or 0.01 to 0.1 mm. Each marker may comprise 1 to 200, 5 to 100 or 10 to 50 code inscriptions or individual parts of code inscriptions, wherein an individual part of a code inscription is intended to mean that not the entire code inscription is present on the marker, which may typically be the case if a code inscription is found at an edge of the marker, so that a part of the inscription has been cut away during the preparation of the marker.

The particulate markers may for instance by manufactured by first preparing a thin base plate material or base sheet from the particle material, which is provided with, e.g. printed or engraved with, code inscription on one or both surfaces, which may then be comminuted, e.g. cut or punched, to the final size and shape of the particles. Alternatively, each marker may in some other way be cut out from a larger item or be cast or punched individually.

The particulate markers may comprise or consist of e.g. a plastic or a plastic polymer, e.g. selected from the group consisting of polyurethane, polyester, polyethyleneterphtalate, polyethylene, polypropylene or a combination of two or more of these. Alternatively, the particulate markers may comprise or consist of e.g. a metal, such as steel.

The particulate markers may in connection with the present invention present substantially the same properties as the abrasive with regard to weight and/or size and/or other properties, and/or they may have a smaller density, e.g. at most half of the density of the abrasive.

The particulate markers may comprise or be supplied with a dye or mixed with coloured particles and/or another tracer, such as ceramics, glass, coloured glass, metal or a mineral, such as e.g. aluminum silicate, flint, quartz, cristobalite, olivine, garnet, corundum, spinel, silicon carbide, fluororescent substance and diamond, which may facilitate the identification of the particulate markers. Alternatively or supplementary, the particulate markers may comprise a DNA tracer or similar DNA-traceable material e.g. as presently used in securing objects such as cars against theft. Alternatively, the particulate markers may comprise or consist of other types of materials that are traceable in connectin with the applied abrasive. The particulate markers may comprise the same or several of the same materials as the abrasive and/or may possess any sutiable property in the abrasive or a variation hereof.

A code "inscription" or "marking" may be any combination of signs, digits, letters and symbols. It may be in the form of a serial number or other numbering methods and/or may comprise alphanumeric symbols. The code inscription or the marking may be printed, engraved, cut or painted onto the surface of the markers. The code inscription or the marking may e.g. be in the form of a number or an alphanumeric code having 3 to 20, 3 to 15, 3 to 12, 3 to 10, 5 to 15, 7 to 13, or 9 to 12 digits.

A "contaminated product" may be understood as a product comprising a blowing agent or the blowing agent as well as a material blown off by abrasive blasting from a building part, or the building part.

"Abrasive blasting" could also be termed "blast abrasion" and is a well-known method for cleaning building parts or removing a surface layer. A particulate material, such as sand, is blown by means of compressed air against a surface, such as a wall, whereby the particles in the material strike against the surface, and a surface material, such as paint, is loosened. Hereby, the surface is blown off. Abrasive blasting may e.g. be effected with a flow of air and/or blowing agent of at least 1, 2, 3, 4, 5, 8 or 10 l/s.

A "blown off material" may be understood as the material or residual material that has been blown off or cleaned off from a building part in connection with a blasting of the building part.

Collection of the contaminated product may be done by sweeping the product together and/or shoveling it up and/or placing it in suitable containers, such as a big bag, and/or aspiring or blowing it for collection by a suitable apparatus.

Detection of a part of the material blown off by abrasive blasting in the contaminated product may e.g. be done by a visual or otherwise optical counting of the amount of particulate markers in a sample of the contaminated product, whereupon the quantity of particles of blown off material correspondingly may be determined, or by a chemical analysis of a sample of the contaminated product, or a measurement of radioactivity in the sample of the contaminated product.

"Blasting job" may be understood as the work or a part of the work associated with the blasting of a building part, e.g. as part of a renovation work or a demolition work affecting one or more buildings or constructions, and may be performed e.g. on a construction site and/or a building part and/or a building material, where abrasive blasting work is done.

"Building material may be understood as a material comprising or substantially consisting of one or more building materials such as paint or paint residuals, concrete or concrete residuals (including cement, sand, gravel and stone), wood, metal and minerals as well as compounds hereof, plastic, brick, stone, plaster, sand, slag, etc.

Another advantage of mixing particulate markers into the blowing agent may be to enable the detection of the type of abrasive or blowing agent. This may be done by assigning a type of abrasive to a specific type of particulate marker. Thereby it may be possible to determine the type of abrasive, e.g. in a quantity of the abrasive, by identifying the type of particulate marker. This may present the further advantage of offering a full or partly traceability of a blowing agent from the time that the particulate markers are added to the blowing agent to the final or partially disposal or reuse, which may open op the possibility of reusing a blowing agent at more than one construction site or in more the one blasting job, inasmuch as it by means of a booking of the blowing agent may be determined, which waste substances the blowing agent has treated by abrasive blasting, and the amount of such waste substances may likewise be fixed.

A further advantage of mixing particulate markers into the abrasive may thus reside in the fact that the determination of a proportion of material blown off by abrasive blasting in a contaminated product is enabled. This may enable the determination of waste substances in the contaminated product, which may in turn enable the determination of the proportion of one or more potentially hazardous waste substances in the contaminated product, which may enable classification of the contaminated product according to the limit values for hazardous waste stipulated by the authorities, which may enable reuse of the contaminated product for further abrasive blasting jobs at the same or other construction sites or in connection with other blasting jobs.

According to one embodiment of the method according to the fourth aspect of the invention, the particulate markers may be mixed into a liquid. Thereby the admixing of the microparticles is facilitated. Such a liquid may be e.g. water.

In another or supplementary embodiment, an item may be cleaned in steps, e.g. in one or more layers e.g. of a surface, or sequences of different materials, wherein use may be made of blowing agent, which may comprise different particulate markers or particulate marks having different code inscription and/or different abrasives for each step or each layer or each different material of the item. The collection of the contaminated product correspondingly may be done in steps; e.g. collection may take place following cleaning of each layer or cleaning of each different material and following each different blowing agent.

An advantage of stage-wise cleaning is that a particularly suitable or efficient abrasive may be used for each layer or material. Moreover, it is possible to keep different waste substances apart in separate contaminated products. This can be done by collecting the contaminated product after each stage. This may provide the additional benefit that it will be possible to dispose of the contaminated product with the specific waste substances according to the particularly suitable methods to this end. Further, only a single minor quantity of the contaminated product needs to be disposed of, instead of a large quantity, which has been used for cleaning the entire item. By using blowing agent with different particulate markers for cleaning of each layer or material, it may further be possible to trace each contaminated product from each layer or material and ascertain that the contaminated product and its waste substances contained in the form of blown off material, is disposed of according to present prescriptions.

In another or supplementary embodiment, the method comprises the step of providing the blowing agent by admixing particulate markers into the abrasive, wherein the markers consist of or consist of parts of the same material as the abrasive. Hereby, the abrasive and/or polishing and/or cleaning properties of the blowing agent is not significantly affected, especially if the physical properties of the markers otherwise correspond to those of the abrasive.

The particulate marker may have a different colour or tint than the abrasive, which may facilitate reading the markers.

In another or supplementary embodiment, the method is applied in connection with a specific building renovation and/or demolition.

In another or supplementary embodiment the blowing agent comprises from 0.0001 to 10, 0.001 to 8, 0.01 to 5, 0.1 to 3, 0.1 to 2 or 0.1 to 1 percent by weight of particulate markers, wherein the abrasive further may comprise the balance or substantially the rest of the blowing agent. The blowing agent correspondingly may comprise less than 10, 9, 8, 7, 6, 5, 4, 3, 2, 1, 0.1, 0.01, 0.001 percent by weight of particulate markers and/or more than 0.0001, 0.001, 0.01, 0.1, 1, 2, 3 or 4 percent by weight of particulate markers.

In another or supplementary embodiment at least a part of or substantially all of the abrasive in the blowing agent has a particle size of 0.001 to 5 mm, 0.002 to 3.8 mm, 0.002 to 3.6 mm, 0.002 to 3.4 mm, 0.002 to 3.2 mm, 0.002 to 3 mm, 0.002 to 2.8 mm, 0.002 to 2.6 mm, 0.002 to 2.4 mm, 0.002 to 2.2 mm, 0.002 to 2 mm, 0.005 to 2 mm, 0.01 to 2 mm, 0.05 to 2 mm, 0.1 to 2 mm, 0.5 to 2 mm, 0.75 to 2 mm, 1 to 2 mm, 0.005 to 3.6 mm, 0.01 to 3.4 mm, 0.05 to 3.2 mm, 0.1 to 3 mm, 0.3 to 2.8 mm, 0.5 to 2.6 mm, 0.7 to 2.4 mm and/or 0.75 to 2.2 mm.

"Particle size" of a particle alternatively may be designated "grain size" and may be understood as a diameter or a maximum spatial extension or the size of the particle in any direction. A particle size may be established by textural analyses by sifting through a number of sieves with decreasing mesh.

In another or supplementary embodiment the blowing agent comprises at least 50, 55, 60, 65, 70, 75, 80, 85 or 90 percent by weight of the abrasive.

In another or supplementary embodiment, the particulate markers are mixed into the abrasive concomitantly with the abrasive blasting, e.g by adding the particulate markers to the abrasive just before it leaves the abrasive blasting apparatus. The particulate markers may for instance be stored in a vessel separately from the abrasive.

In another or supplementary embodiment, the blowing agent is prepared by mixing a certain amount of abrasive with a certain amount of particulate markers. This may happen in an automatized process or manually.

In another or supplementary embodiment, the method comprises the further step following the abrasive blasting of assigning the contaminated product to a specific blasting job, then possibly correlating the contaminated product with the assigned specific blasting job, and the possible determining a type of the material blown off by abrasive blasting in the contaminated product with the aid of the assigned specific blasting job.

An advantage of assigning the contaminated product to a specific blasting job following the abrasive blasting is the prospect of documenting by means of the particulate markers, where the contaminated product has been used. The contaminated product may thus be traced back to the assigned blasting job by identifying the particulate markers. By booking the substances, which may or will be blown off in a specific blasting job, it may thus be possible to determine the possible substances (in the form of material blown off by abrasive blasting) that the contaminated product contains or may contain.

The correlation of the contaminated product with a specific blasting job may be effected by marking of the contaminated product, possibly be applying a bar code or label or printing or by other means applying an identification on a container, in which the contaminated product is collected, either prior to, during or following collection. The bar code or the label may be booked in a register such as to assign a specific blasting job to a construction site, part of a construction site, a time span for a blasting job, a part of a building and/or possible substances occurring on the building part to be treated by abrasive blasting.

By correlation of the contaminated product with the assigned specific blasting job, it may be possible to assure that upon reuse of the contaminated product for a new blasting job, no waste substances are spread that do not occur at the new blasting job.

By booking and/or registering a blowing agent containing a specific type of particular markers for a specific blasting job, it may further by possible by identification of the particulate markers in the contaminated product to determine the specific blasting job, which the blowing agent has been used for and which possible substances in the form of blown off material that may be found in the contaminated product.

In another or supplementary embodiment, the step of assigning the markers to a specific blasting job comprises booking the substances present on the items to be treated by abrasive blasting.

In another or supplementary embodiment the method comprises the step of assigning the markers to a specific blasting job prior to the abrasive blasting. This may be done by booking and assigning the type of particulate markers added to the blowing agent, optionally together with information on, which substances occur in the blasting job to be performed. An advantage of assigning the blowing agent to a specific blasting job prior to the abrasive blasting may be the provision of total traceability from a time before use until disposal or reuse.

In another or supplementary embodiment the code inscription comprises one or more signs, digits, letters and/or symbols, which may carry the advantage that it becomes possible readily to for easily recognizable and yet potentially unique codes, which may be used for distinguishing or booking different lots of blowing agent and contaminated product.

In another or supplementary embodiment the markers each comprise or substantially consist of a material, wherein the code inscription is preferably punched, printed, melted down or engraved in a surface of the marker. An advantage to this may be that the code inscription is not quickly worn off or graded from the surface of the markers by abrasive blasting and thus remains readable possible after one or mere reuses.

In another or supplementary embodiment the particulate markers comprise or substantially consist of a plastic material.

In another or supplementary embodiment the method further comprises that the determination of the proportion of material blown off by abrasive blasting in the collected contaminated product comprises determination of an amount of particulate markers in the contaminated product. An advantage to this may be that there may be used a pre-determined method of analysis for determination of the amount of particulate markers in the contaminated product and hence for determination of the amount of blown off material in the contaminated product, notwithstanding the type of blown off material.

Another or supplementary embodiment of the method comprises that the determination of a quantity of particulate markers in the contaminated product is done by an optical or visual, manual or automatic counting under or by the assistance of a microscope or a spectroscope, possibly in a sample of the contaminated product. Here, a number of markers is counted in a certain amount or weight of the contaminated product. A visual or optical counting may be performed by the assistance of a microscope and/or spectroscopy, wherein the amount of blowing agent particles is determined by analysing the absorption of different wavelengths of light in a sample of the collected contaminated product. Then, the amount of particles of blown off material or the amount of blowing agent particles in the sample of the collected contaminated product is determined by analysing the extent of double refraction in the sample, whereupon the amount of particles of blown off material may be established, possibly by a simple calculation.

In another or supplementary embodiment the method further comprises an analysis of a material composition or a content of one or more materials, such as hazardous substances, in the building part or in or at a surface hereof. This may then be registered and possibly assigned with data for code inscription in the employed markers. This analyses may be performed before or after the abrasive blasting, whereby an amount of a specific material in the blown off material may be determined as explained in the above. On this basis a proportion of the specific material within the contaminated product may correspondingly be calculated, and said proportion may be registered.

In another or supplementary embodiment, one or more or all of the mentioned analysis results are registered in an electronic or manual recording system.

In another or supplementary embodiment a proportion of a specific material in the contaminated product is compared to a limit value, and it is determined on this basis, whether the contaminated product may be reused e.g. for a new corresponding blasting job.

In another or supplementary embodiment the contaminated product is reused as a blowing agent at another construction site or in another blasting job or for blasting of another building part or for another purpose, for instance as a building material. The method for blasting of the other building part may be according to the fourth aspect of the invention or one of its embodiments.

In another or supplementary embodiment, the markers are laminar, wherein the laminar shape preferably presents a maximum width or length of 0.002 to 10 mm, 0.005 to 5 mm, 0.01 to 1 mm or 0.1 to 1 mm and/or a thickness of 0.002 to 10 mm, 0.002 to 10 mm, 0.005 to 5 mm, 0.01 to 1 mm or 0.1 to 1 mm.

The present invention in a fifth aspect relates to a blowing agent, which is suitable for use in a method for abrasive blasting according to the fourth aspect of the invention, wherein the blowing agent comprises:
an amount of substantially particulate abrasive for grinding of a building part, and
from 0.0001 to 10 percent by weight of particulate markers admixed with abrasive, wherein the particulate markers comprise a number of microparticles, each of which presents on a surface a code inscription or marking, which may be read visually, such as a serial number,
wherein a least a part of the abrasive has a particle size of 0.002 to 4 mm, and wherein the blowing agent comprises at least 50 percent by weight of the abrasive at a particle size of 0.002 to 4 mm, and
wherein the markers comprise or substantially consist of a plastic material.

The blowing agent according to the fifth aspect of the invention may be used as the blowing agent in the method according to the fourth aspect of the invention. The blowing agent according to the fourth aspect of the invention may further in itself comprise one or more of the properties of the blowing agent employed in the method as described in the above or as obtained or used in any of the embodiments of the fourth aspect of the invention.

The present invention in a sixth aspect relates to a contaminated product, which comprises the blowing agent according to the fifth aspect of the invention, as well as a building material, which is another material than the blowing agent. The building material may for the sixth aspect of the invention further in itself comprise one or more of the properties described for the building materials mentioned in the above or as obtained or used in any of the embodiments of the fourth aspect of the invention.

In a seventh aspect, the invention relates to use of the blowing agent accord to the fifth aspect of the invention for abrasive blasting of a building part, possibly for abrasive blasting according to the fourth aspect of the invention or one of its embodiments.

In the following, embodiments of the fourth, fifth, sixth and seventh aspect of the invention are presented:
1. A method for abrasive blasting of a building part, such as for abrasive cleaning of a building face, wherein said method comprises the steps of:
   - providing a blowing agent, wherein the blowing agent comprises an amount of substantially particulate abrasive for grinding of the building part, and wherein the blowing agent comprises from 0.0001 to 10 percent by weight of particulate markers admixed with the abrasive, wherein the particulate markers are microparticles, each of which presents on a surface a code inscription or marking, which may be visually read, such as a serial number,
   - treating the surface of the building part by abrasive blasting with the blowing agent, whereby a contaminated product is produced, wherein the contaminated product comprises at least parts of the blowing agent and material that has been blown off from the surface by abrasive blasting,
   - collection at least parts of the contaminated product and
   - assigning the contaminated product to a specific blasting job by reading the code inscription or the marking of at least one of the markers.
2. A method according to embodiment 1, wherein the method comprises the step of assigning the markers to a specific blasting job prior to the abrasive blasting.
3. A method according to embodiment 1 or 2, wherein the method comprises the further step of correlating the contaminated product with as assigned specific blasting job following the abrasive blasting, and then possibly determining a type of the material blown off by abrasive blasting in the contaminated product by means of the assigned specific blasting job.
4. A method according to one of the preceding embodiments, wherein the step of assigning the markers to a specific blasting job comprises booking the substances occurring on the items to be treated by abrasive blasting.
5. A method according to one of the preceding embodiments, wherein the code inscription comprises on or more signs, digits, letters and/or symbols.
6. A method according to one of the preceding embodiments wherein the markers each comprises or substantially consists of a material, wherein the code inscription preferably is punched, printed, melted down or engraved into the surface.
7. A method according to one of the preceding embodiments, wherein the markers are laminar, and wherein the laminar shape preferably has a maximum width or length of 0.002 to 10 mm and/or a thich-ness of 0.002 to 10 mm.
8. A blowing agent for use in the method for abrasive blasting according to one of the preceding embodiments, wherein the blowing agent comprises:
   an amount of substantially particulate abrasive for grinding of the building part, and
   from 0.0001 to 10 percent by weight of particulate markers admixed with the abrasive, wherein the particulate markers comprise a number of microparticles, each of which presents on a surface a code inscription or marking, which may be read visually, such as a serial number,
   wherein at least a part of the abrasive has a particle size of 0.002 to 4 mm, and wherein the blowing agent comprises at least 50 percent by weight of the abrasive with a particle size of 0.002 to 4 mm, and
   wherein the markers comprise or substantially consist of a plastic material.
9. A contaminated product comprising the blowing agent according to embodiment 8, and a building material comprising a material different from the blowing agent.
10. Use of the blowing agent according to embodiment 8 for abrasive blasting of a building part.

In an eighth aspect, the invention relates to a method for abrasive blasting of a building part, such as abrasive cleaning of a building face, wherein the method comprises the steps of:
- providing a blowing agent, wherein the blowing agent comprises an amount of substantially particular abrasive for grinding of the building part, and wherein the blowing agent comprises an amount of tracer admixed with the abrasive, wherein the tracer comprises another material than the abrasive, and/or wherein the tracer has at least one traceable physical property, which is different from the corresponding physical property in the abrasive,
- treating the surface of the building part by abrasive blasting with the blowing agent, whereby a contaminated product is produced, wherein the contaminated product comprises at least parts of the blowing agent as well as material blown off by abrasive blasting from the surface,
- collecting at least parts of the contaminated product, and
- determining with the aid of the tracer a proportion of material blown off by abrasive blasting in the collected contaminated product.

An advantage of this method may be the enablement of a determination of an amount of blown off material in the collected contaminated product from a blasting job. This may correspondingly make at possibly to determine the proportion of the blown off material, which may comprise potentially hazardous waste material, in the contaminated product. This in turn may allow with sufficient certainty for complying with the demands of the authorities to classify the contaminated product according to the officially stipulated limit values for hazardous waste. This may in turn further the possibility of reusing the contaminated product as a blowing agent in one or more further blasting jobs, which may be on other construction sites, insofar the concentration of hazardous waste in the contaminated product is below the stipulated limit values. This may reduce consumption of resources for production of new blowing agent, thereby relieving the environment and saving time and money for provision and preparation of new blowing agent. Further, a substantially reduced environmental impact is attained.

The term "contaminated product" in the present application may be understood as a product comprising blowing agent with abrasive and tracer contaminated with or admixed with a blown off material and does not necessarily entail that the blown off material comprises hazardous materials or the like. The blown off material may comprise the same material as the blowing agent and/or other materials.

A "blowing agent" may be understood as comprising or substantially consisting of an abrasive for abrasive blasting as well as tracer and/or particulate markers, which is a different material than the abrasive. The blowing agent may also comprise e.g. air, water or other liquids or impurities of various kinds. The abrasive, the tracer and/or the particulate markers may be substantially homogenously distributed in the blowing agent, i.e. so that in different sample volumes of the blowing agent, substantially the same amount or percent by weight of the tracer and/or the particular markers are present.

A tracer may in connection with the present aspect of the invention have substantially the same properties as the abrasive when it comes to weight and/or size and/or other properties. The tracer may comprise or be a dye or an abrasive supplied with a dye or admixed with coloured particles, ceramics, glass, coloured glass, metal or minerals as e.g. aluminum silicate, flint, quartz, cristobalite, olivine, garnet, corundum, spinel, fluorescent substance and diamond. Alternatively, a tracer may comprise a DNA tracer or similar DNA-traceable material, e.g. as currently applied in securing objects such as cars against theft. Alternatively, a tracer may comprise or consist of other types of materials, which are traceable in connection with the applied abrasive and/or the blown off material. A tracer may comprise the same or one or more of the same materials as the abrasive but must be traceable separately from the applied abrasive and/or the blown of material; e.g. one type of abrasive may be used as abrasive and another type of abrasive may be used as tracer in the abrasive. The type of abrasive may her comprise any suitable property or variation of the abrasive; e.g. a type of abrasive substantially of the same material as the abrasive but with another tint or another similar property than the abrasive may be used as tracer; wherein the tint, the case being, must be sufficiently different from the tint of the abrasive in order for the above analyses to be performable. Collection of the contaminated product also here may be done by sweeping the product together and/or shoveling it up and/or disposing it in suitable containers, such as a big bag, and or aspiring or blowing it for collection by a suitable apparatus.

The determination of a proportion of the material blown off by abrasive blasting in the contaminated product may e.g. take place by visual or otherwise optical counting of the amount of blowing agent particles in a sample of the contaminated product, after which the amount of particles of blown off material correspondingly may be determined, or by a chemical analysis of a sample of the contaminated product or a measurement of radioactivity in the sample of the contaminated product.

Another advantage of admixing a tracer in the blowing agent is to enable the determination of the type of abrasive or blowing agent. This may be done by assigning a given type of abrasive to a specific tracer. Thereby, it may be possible to determine the type of abrasive, e.g. in a lot of the abrasive, by identification of the tracer. This may further provide the advantage of offering a full or partial traceability of a blowing agent from the time at which the tracer is added to the blowing agent, until a final or partial disposal or reuse, which may open up the possibility of reusing a blowing agent at more than one construction site and in more than one blasting job, as it with the aid of booking of the blowing agent may be determined, which waste substances have been blown off by blast abrasion by the blowing agent, and the amount of such waste substances may be determined.

A further advantage of admixing a tracer into the abrasive may thus be to enable the determination of a proportion of material blown off by abrasive blasting in a contaminated product. It may enable the determination of the amount of waste substances in the contaminated product. This in turn may enable the determination of the proportion of one or mere potentially hazardous waste substances in the contaminated product, which may enable classification of the contaminated product according to the officially stipulated limit values for hazardous waste, which may in turn enable reuse of the contaminated product for further abrasive blasting jobs at the same or other construction sites or in connection with other blasting jobs.

In another or supplementary embodiment, the method comprises the step of milling and sieving the contaminated product, such that a fraction of the contaminated product is formed having a certain particle size, prior to the step of determining a proportion of material blown off by abrasive blasting in the contaminated product. The established particle size may be 0.01 to 0.15 mm, 0.02 to 0.14 mm, 0.03 to 0.13 mm, 0.04 to 0.12 mm, 0.05 to 0.11 mm or 0.06 to 0.1 mm. The established particle size may also be more than 0.005 mm, 0.006 mm, 0.007 mm, 0.008 mm, 0.009 mm, 0.01 mm, 0.015 mm, 0.02 mm, 0.025 mm, 0.03 mm, 0.035 mm, 0.04 mm, 0.045 mm, 0.05 mm. The established particle size may also be less than 0.2 mm, 0.19 mm, 0.18 mm, 0.17 mm, 0.16 mm, 0.15 mm, 0.14 mm, 0.13 mm, 0.12 mm, 0.11 mm or 0.1 mm.

In another or supplementary embodiment, the tracer may be dissolved or otherwise included in a liquid, which may be a material different from the tracer. The tracer may e.g. be or comprise a liquid admixed with another liquid, and/or the tracer may be or comprise a solid substance, potentially a particulate, solid substance, admixed with a liquid. Hereby, application on or admixing of the tracer in the abrasive is facilitated. Such a liquid may be e.g. water with a binder or may be a paint or lacquer or the like, e.g. a clear varnish. Following application or admixing it may be relevant to allow the liquid to dry up or harden, so that a binding of the tracer to the tracing agent may be obtained. The tracer in itself may be a liquid, such as a paint or lacquer or the like and may be clear or coloured.

In another or supplementary embodiment, an item may be cleaned in steps, e.g. in one or more layers e.g. of a surface, or sequences of different materials, wherein use may be made of blowing agent, which may comprise different traceres and/or different abrasives for each step or each layer or each different material of the item. The collection of the contaminated product correspondingly may be done in steps; e.g. collection may take place following cleaning of each layer or cleaning of each different material and following each different blowing agent.

An advantage of stage-wise cleaning is that a particularly suitable or efficient abrasive may be used for each layer or material. Moreover, it is possible to keep different waste substances apart in separate contaminated products. This can be done by collecting the contaminated product after each stage. This may provide the additional benefit that it will be possible to dispose of the contaminated product with the specific waste substances according to the particularly suitable methods to this end. Further, only a single minor quantity of the contaminated product needs to be disposed of, instead of a large quantity, which has been used for cleaning the entire item. By using blowing agent with different tracer for cleaning of each layer or material, it may further be possible to trace each contaminated product from each layer or material and ascertain that the contaminated product and its waste substances contained in the form of blown off material, is disposed of according to present prescriptions.

In another or supplementary embodiment, the method comprises the step of providing the blowing agent by admixing a tracer into the abrasive, wherein the tracer consists of the same material as the abrasive but comprises one or more optical properties differint from those of the abrasive. Such a property may be a colour or a tint. Hereby, the abrasive and/or polishing and/or cleaning properties of the blowing agent is not significantly affected, especially if the physical properties of the tracer otherwise correspond to those of the abrasive.

In another or supplementary embodiment, the method is applied in connection with a specific building renovation and/or demolition.

In another or supplementary embodiment the blowing agent is assigned to a specific blasting job prior to the abrasive blasting by means of a tracer. This may be done by booking and assigning the type of tracer added to the blowing agent, possibly together with information on, which substances occur in the blasting job to be performed. Advantageously, by assigning the blowing agent to a specific blasting job prior to the abrasive blasting full traceability from the time prior to use until disposal or reuse may be provided.

In an embodiment of the method according to the invention, the blowing agent comprises from 0.0001 to 10, 0.001 to 8, 0.01 to 5, 0.1 to 3, 0.1 to 2.0,1 to 1, 0.5 to 1, 0.5 to 2, 0.5 to 3, 0.5 to 4, 0.5 to 5, 0.5 to 6, 1 to 5, or 2 to 4 percent by weight of the tracer, where the abrasive further may make up the balance or substantially the rest of the blowing agent. Correspondingly, the blowing agent may comprise less than 10, 9, 8, 7, 6, 5, 4, 3, 2, 1, 0.1, 0.01, 0.001 percent by weight of the tracer and/or more than 0.0001, 0.001, 0.01, 0.1, 1, 2, 3 or 4 percent by weight of the tracer. If too little tracer, e.g. corundum, is present in the blowing agent, it may cause the tracing agent not to be traceable with sufficient precision. Too much tracing agent may affect the grinding properties of the blowing agent negatively.

In another or supplementary embodiment, at least a part of or substantially all of the abrasive in the blowing agent has a particle size of 0.001 to 5 mm, 0.002 to 3.8 mm, 0.002 to 3.6 mm, 0.002 to 3.4 mm, 0.002 to 3.2 mm, 0.002 to 3 mm, 0.002 to 2.8 mm, 0.002 to 2.6 mm, 0.002 to 2.4 mm, 0.002 to 2.2 mm, 0.002 to 2 mm, 0.005 to 2 mm, 0.01 to 2 mm, 0.05 to 2 mm, 0.1 to 2 mm, 0.5 to 2 mm, 0.75 to 2 mm, 1 to 2 mm, 0.005 to 3.6 mm, 0.01 to 3.4 mm, 0.05 to 3.2 mm, 0.1 to 3 mm, 0.3 to 2.8 mm, 0.5 to 2.6 mm, 0.7 to 2.4 mm and/or 0.75 to 2.2 mm.

In another or supplementary embodiment the blowing agent comprises at least 50, 55, 60, 65, 70, 75, 80, 85 or 90 percent by weight of the abrasive.

In another or supplementary embodiment, the tracer is admixed in the abrasive concomitantly with the abrasive blasting, e.g. by supplying the tracer to the abrasive just before it leaves the abrasive blasting apparatus. The tracer may be stored e.g. in a vessel separately from the abrasive.

In another or supplementary embodiment the blowing agent is prepared by mixing a certain amount of abrasive with a certain amount of tracer. This may be done in an automatized process or manually.

In another or supplementary embodiment the method comprises the additional step of assigning the contaminated product to a specific blasting job following the abrasive blasting, then correlating the contaminated product with the assigned specific blasting job and then determining a type of the material blown off by abrasive blasting in the contaminated product by means of the assigned specific blasting job.

An advantage of assigning the contaminated product to a specific blasting job following the abrasive blasting is the prospect of documenting by means of the tracers, where the contaminated product has been used. The contaminated product may thus be traced back to the assigned blasting job by identifying the tracer. By booking the substances, which may or will be blown off in a specific blasting job, it may thus be possible to determine the possible substances (in the form of material blown off by abrasive blasting) that the contaminated product contains or may contain.

The correlation of the contaminated product with a specific blasting job may be effected by marking of the contaminated product, possibly be applying a bar code or label or printing or by other means applying an identification on a container, in which the contaminated product is collected, either prior to, during or following collection. The bar code or the label may be booked in a register such as to assign a specific blasting job to a construction site, part of a construction site, a time span for a blasting job, a part of a building and/or possible substances occurring on the building part to be treated by abrasive blasting.

By correlation of the contaminated product with the assigned specific blasting job, it may be possible to assure that upon reuse of the contaminated product for a new blasting job, no waste substances are spread that do not occur at the new blasting job.

By booking and/or registering a blowing agent containing a specific type of tracer for a specific blasting job, it may further by possible by identification of the tracer in the contaminated product to determine the specific blasting job, which the blowing agent has been used for and which possible substances in the form of blown off material that may be found in the contaminated product.

In another or supplementary embodiment the method further comprises that the determination of the proportion of material blown off by abrasive blasting in the collected contaminated product comprises determination of an amount of tracer in the contaminated product. An advantage to this may be that there may be used a pre-determined method of analysis for determination of the amount of tracer in the contaminated product and hence for determination of the amount of blown off material in the contaminated product, notwithstanding the type of blown off material.

In another or supplementary embodiment, the tracer is particulate or in fluid form. An advantage of a particulate tracer may be that it may get very close to or may fully imitate the properties of the particulate abrasive substance. An advantage of a tracer in fluid form may be that it is miscible with the abrasive, so that the particles of the abrasive absorbs the tracer, and traceability of the blowing agent may be achieved without any or any substantial influence on the properties of the abrasive.

In another or supplementary embodiment, the method comprises that the determining of the amount of the tracer in the contaminated product is done by optical or visual, manual or automatic counting under by assistance of a microscope, by chemical quantification or by measurement of radioactivity. An optical counting may be done by means of a microscope and/or spectroscopy, wherein the amount of blowing agent particles is determined by analysing the absorption of light at different wavelengths in a sample of the collected contaminated product. Then, the amount of particles of blown off material or the amount of blowing agent particles in the sample of the collected contaminated product may be determined by analysing the extent of double refraction in the sample, whereupon the amount of particles of blown off material may be determined, potentially by a simple calculation.

A chemical quantification of the amount of tracer in the contaminant product may be done by means of a chemical analysis of a sample of the contaminated product. This may e.g. be performed by mixing the sample with a specific chemical that may cause a chemical reaction forming a product of reaction. The amount of reaction product formed may then be used to calculate the amount of tracer and thereby the amount of blowing agent and thereby again the amount of blown off material in the sample.

The measurement of radioactivity for determining the amount of tracer in the contaminated product may be performed by measuring the radioactivity of a sample of the contaminated product. The measurement of radioactivity may then correspondingly be used to calculate the amount of tracer in the sample of the contaminated product and thereby the amount of blowing agent, which makes possible the calculation of the amount of blown off material in the sample.

In another or supplementary embodiment, the method further comprises an analysis of a material composition or a content of one or more materials, such as hazardous materials, in the building part or in or at a surface hereof. This analysis may be performed before or after the abrasive blasting, whereby an amount of a specific material in the blown off material may be determined as explained in the above. On this basis, a proportion of the specific material in the contaminated product may be calculated, and this proportion may be registered.

In another or supplementary embodiment one or more of said analysis results are registered in an electronic or manual recording system.

In another or supplementary embodiment a proportion of a specific material in the contaminated product is compared to a limit value, and it is determined whether the contaminated product may be reused e.g. for a new corresponding blasting job.

In another or supplementary embodiment the contaminated product is reused as a blowing agent at another construction site or in another blasting job or for blasting of another building part or for another purpose, for instance as a building material. The method for blasting of the other building part may be according to the eighth aspect of the invention or one of its embodiments.

In another or supplementary embodiment the tracer comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond, fluorescent substance or other minerals or a DNA tracer.

The present invention in a ninth aspect relates to a blowing agent for use in the method for abrasive blasting according to the eighth aspect of the invention, wherein the blowing agent comprises:
an amount of substantially particulate abrasive for grinding of the building part, and
an amount of tracer admixed with the abrasive, wherein the tracer comprises a different material than the abrasive,
wherein at least a part of the abrasive has a particle size of 0.002 to 4 mm, and wherein the blowing agent comprises at least 50 percent by weight of the abrasive having a particle size of 0.002 to 4 mm, and
wherein the tracer comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond, fluorescent substance or other minerals and a DNA tracer.

The blowing agent according to the ninth aspect of the invention may be used as the blowing agent in the method according to the eighth aspect of the invention. The blowing agent according to the ninth aspect of the invention may additionally by itself partake in one or more of the properties described in the above or as obtained or used in any one of the embodiments of the eighth aspect of the invention.

The present invention in a tenth aspect relates to a contaminated product, which comprises the blowing agent according to the ninth aspect of the invention as well as a building material, which is a material different from the blowing agent. The building material may with regard to the tenth aspect of the invention by itself partake in one or more of the properties described in the above or as obtained or used in any one of the embodiments of the eighth aspect of the invention.

In an eleventh aspect, the invention relates to use of the blowing agent according to the ninth aspect of the invention for abrasive blasting of a building part, potentially for abrasive blasting according to the eighth aspect of the invention or one of its embodiments.

In the following, embodiments of the eighth, ninth, tenth and eleventh aspect of the invention is listed:
1. A method for abrasive blasting of a building part, such as abrasive cleaning of a building face, wherein the method comprises the steps of:
   - providing a blowing agent, wherein the blowing agent comprises an amount of substantially particular abrasive for grinding of the building part, and wherein the blowing agent comprises an amount of tracer admixed with the abrasive, wherein the tracer comprises another material than the abrasive, and/or wherein the tracer has at least one traceable physical property, which is different from the corresponding physical property in the abrasive,
   - treating the surface of the building part by abrasive blasting with the blowing agent, whereby a contaminated product is produced, wherein the contaminated product comprises at least parts of the blowing agent as well as material blown off by abrasive blasting from the surface,
   - collecting at least parts of the contaminated product, and
   - determining with the aid of the tracer a proportion of material blown off by abrasive blasting in the collected contaminated product.
2. The method according to embodiment 1, wherein the metod comprises the additional step of:
   assigning, after the abrasive blasting, the contaminated product to a specific blasting job, then correlating the contaminated product with the assigned specific blasting job and then determine a type of the material blown off by abrasive blasting in the contaminated product by the aid of the assigned specific blasting job.
3. The method according to embodiment 1 or 2, wherein the determination of the proportion of material blown off by abrasive blasting in the collected contaminated product comprises the determination of an amount of the tracer in the contaminated product.
4. A method according to any one of the preceding embodiments, wherein the tracer is particulate or fluid.
5. A method according any one of the preceding embodiments, wherein the determination of an amount of tracer in the contaminated product is done by optical counting under a microscope or by a chemical quantification or by a measurement of radioactivity.
6. A method according to any one of the previous embodiments, wherein the amount of tracer admixed with the blowing agent amounts to 0.0001 to 10 percent by weight of the blowing agent.
7. A method according to any one of the preceding embodiments, wherein the tracer comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond and other minerals, fluorescent substance and DNA tracer.
8. A blowing agent for use in the method for abrasive blasting according to one of the preceding embodiments, wherein the blowing agent comprises:
   an amount of substantially particulate abrasive for grinding of the building part, and
   an amount of tracer admixed with the abrasive, wherein the tracer comprises a different material than the abrasive, and/or wherein the tracer presents at least one traceable physical property, which is different from the corresponding physical property in the abrasive,
   wherein at least a part of the abrasive has a particle size of 0.002 to 4 mm, and wherein the blowing agent comprises at least 50 percent by weight of the abrasive having a particle size of 0.002 to 4 mm, and
   wherein the tracer comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond, fluorescent substance and DNA tracer.
9. A contaminated product, which comprises the blowing agent according to embodiment 8 as well as a building material, which is different material than the blowing agent.
10. Use of the blowing agent according to embodiment 8 in abrasive blasting of a building part.

Any one of the embodiments of the invention according to the first to the eleventh aspect may be combined with any other embodiment according to the first to the eleventh aspect of the invention.

In another or supplementary embodiment of the method according to the fourth and eighth aspect of the invention, the blowing agent thus comprises both particulate markers and a tracer. An advantage of the blowing agent comprising both particulate markers and a tracer is the enablement of an even more certain determination of a type of blowing agent or a proportion of blown off material in a contaminated product. Besides, it may improve the freedom of choice in the manufacture of the blowing agent, enabling an enhanced effectivity of the blowing agent and/or reduced costs associated with selection the most suitable or most cost-effective tracer or particulate markers or combination thereof.

In a second or supplying embodiment of the method according to the fourth and eighth aspect of the invention, the method comprises that the blowing agent is provided by admixing a tracer in an abrasive, following which the abrasive is partitioned in several lots, where a unique type of particulate markers different from the others is admixed in each lot.

An advantage of providing several lots of blowing agent comprising the same tracer but unique markers may be to enable the preparation of a more cost-effective blowing agent, as the tracer may be supplied in large quantities, resulting in lower prices that still enable determination of the proportion of blown off material in a contaminated product and assigning a lot of the blowing agent to a separate specific blasting job by means of the markers.

In a second or supplying embodiment of the method according to the fourth and eighth aspect of the invention, the method comprises that the blowing agent is provided by admixing a type of particulate markers into an abrasive, and then the blowing agent is partitioned in several lots, where different tracers are mixed in each lot.

In a second or supplying embodiment of the method according to the fourth and eighth aspect of the invention, the blowing agent comprises two different types of tracer.

In a second or supplying embodiment of the method according to the fourth and eighth aspect of the invention, the blowing agent comprises two different types of tracer and particulate markers.

This may enable the determination of a proportion of a blown off material in a contaminated product or a lot of blowing agent with still better certainty.

In another or supplementary embodiment, the method is performed according to both the first aspect of the invention and the fourth aspect of the invention or according to both the first aspect of the invention and according to the eighth aspect of the invention or according to both the first aspect of the invention and according to both the fourth and the eighth aspect of the invention.

An advantage of this may be the enablement of a more cost-effective work process, as it is possible to apply the tracer in connection with the first aspect of the invention to a layer or a surface of the building part, wherein the quantification of waste material in the contaminated product potentially is not of particular importance or advantage, and where it is not possible to use a blowing agent with tracer and/or particulate markers. Further advantageous, a tracer may now be used for the determination of a building renovation or demolition, to which a contaminated product is assigned, and a blowing agent with tracer and/or particulate markers may be used for the determination of an amount of waste material in the contaminated product. Hereby, the most suitable combination of tracer and/or blowing agent may be selected with a view to efficiency and costs for an upcoming building demolition or renovation.

The demolition or renovation may take place in stages, wherein an embodiment of one among the first, fourth and eighth aspect of the invention or a combination hereof is performed in each stage, and wherein the stages may be performed with a different embodiment and/or aspect and/or combination of aspects in each stage, and/or wherein the particulate markers or the tracer is varied between several of the stages.

### Example 1

In the following a detailed example of implementation in practice of the first to third aspect of the present invention is described.

First, the tracing agent is produced in an automatized process by means of an allocation and mixing apparatus. A user selects a type and an amount of mixing substance and tracer and/or particulate markers, respectively, following which the allocation and mixing apparatus supplies the selected amount of mixing substance and tracer and/or markers to a mixing chamber. In the present example, the tracer may e.g. comprise approximately 95 percent by weight of mixing substance in the form of a transparent binder, 2.5 percent by weight of particulate aluminum silicate and approximately 2.5 percent by weight of particulate markers in form of laminar microparticles of plastic having printed identical microserial numbers with ten digits. In the mixing chamber, the mixing substance, the tracer and the markers are mixed to yield a homogenous tracing agent, i.e. a tracing agent, wherein the tracing agent and the markers are distributed substantially homogenously in the transparent binder.

Then the tracing agent is assigned and registered by reference to a type of tracer and markers, to a specific building demolition or renovation, in an electronic recording system on a computer. In the recording system, the specific building demolition or renovation is assigned to the various hazardous waste materials, which, following an initial analysis of the front, is expected to occur in the job. Then the complete tracing agent is poured into a paint container or another suitable container, is provided with a label having a unique bar code assigned to the tracing agent in the recording system, and is transported to the construction site or the like, where it is to be used in a front demolition.

At the construction site, the tracing agent is supplied to a paint sprayer, and the tracing agent is sprayed onto the front. Then the front is torn down by the aid of a pneumatic hammer in an enclosed or sealed cabinet arranged for the purpose and covered with plastic.

After tearing down by means of the pneumatic hammer has been completed, the contaminated product, primarily consisting of material and residual material from the front and the tracing agent, is collected by aspiration with an aspirator and is kept in a big bag or another suitable container, to which is applied a new label with another unique bar code assigned to the contaminated product in the recording system.

Then, a sample of approximately 10 cm³ is taken out from the contaminated product in a sample vessel for analysis. The sample vessel is provided with a label with the same bar code as on said big bag containing the contaminated product and is sent to a laboratory for analysis.

In the laboratory, part of the contaminated product is spread out on a microscope face. Then it is determined by visual inspection that the sample comprises the tracing agent aluminum silicate and/or the markers having the same ten-digit serial number as earlier recorded, and this is noted in the recording system. From the data in the recording system it can hence be unequivocally determined that the contaminated product in said big bag originates from the specific building demolition or renovation, and this is noted in the recording system.

If said initial analysis shows that a surface of the front, which is expected to be torn down, contains e.g. about 1 % of a specific type of hazardous waste, it may be assumed that the torn down material likewise includes about 1 % of the specific type of hazardous waste.

On this background, a proportion of the specific hazardous type of waste in the contaminated product may also be calculated, and this proportion may be registered in the recording system.

If the proportion of the specific type of hazardous waste in the contaminated product is below a limit value stipulated by the authorities in relation to reuse of the blowing agent, the contaminated product may henceforth be classified in the recording system as reusable for production of a new building part or building material in new building work.

The contaminated product is then used in the production of a building part or building material.

Hereby substantial environmental benefits and cost savings are obtained as described in the above.

### Example 2

In the following, a detailed example of implementation in practice of the fourth to seventh aspect of the present invention is described.

First, the blowing agent is produced in an automatized process by means of an allocation and mixing apparatus. A user selects a type and an amount of abrasive and particulate markers, respectively, and then the allocation and mixing apparatus supplies the selected amount of abrasive and markers to a mixing chamber. In the present example, the blowing agent e.g. comprises approximately 95 percent by weight of abrasive in the form of quartz sand and approximately 5 percent by weight of particulate markers in form of laminar microparticles of plastic having a printed serial number in the form of ten digits. In the mixing chamber, the abrasive and the markers are mixed to yield a homogenous blowing agent, i.e. a blowing agent, wherein the markers are distributed substantially homogenously in the abrasive.

Then the blowing agent is assigned and registered by reference to the type of markers, to a specific blasting job, in an electronic recording system on a computer. In the recording system, the specific blasting job is assigned to the various hazardous waste materials, which, following an initial analysis of the front, is expected to occur in the job. Then the complete blowing agent is poured into a big bag or another suitable container, is provided with a label having a unique bar code assigned to the blowing agent in the recording system, and is transported to the construction site or the like, where it is to be used for abrasive blasting of a building part in the form of a building front.

At the construction site, the blowing agent is supplied to an abrasive blasting apparatus as described in the introduction above, and the front is treated by abrasive blasting with the abrasive supplied with compressed air as described in the above in an enclosed or sealed cabin covered by plastic and arranged for the purpose.

After the abrasive blasting has been performed by means of the abrasive blasting apparatus, the contaminated product, primarily consisting of the consumed blowing agent and the material blown off from the front of the building by abrasive blasting, is collected by aspiration with an aspirator and is kept again in a big bag, to which is applied a new label with another unique bar code assigned to the contaminated product in the recording system.

Then, a sample of approximately 10 cm³ is taken out from the contaminated product in a sample vessel for analysis. The sample vessel is provided with a label with the same bar code as on said big bag containing the contaminated product and is sent to a laboratory for analysis.

In the laboratory, part of the contaminated product is spread out on a microscope face. Then it is determined by visual inspection that the sample comprises the markers having the same ten-digit serial number as earlier recorded, and this is noted in the recording system. From the data in the recording system it can hence be unequivocally determined that the contaminated product in said big bag originates from the specific blasting job, and this is noted in the recording system.

As part of the same procedure, a counting of the particulate markers in the contaminated product is performed by means of an optical analysis, viz. a visual counting under the microscope, and the amount of markers in the sample is determined on the basis of the known weight of the markers in correlation with the weight of the sample.

From the amount of markers in the sample the amount of blowing agent in the sample is then calculated with the aid of the assigned data in the register regarding the mixing rations of abrasive and markers in the blowing agent.

On the basis of a simple calculation, the proportion of material in the sample blown off by abrasive blasting is then determined, whereupon the proportion of material blown off by abrasive blasting in the collected contaminated product may be readily calculated.

If said initial analysis shows that the surface of the front, which is expected to be treated by abrasive blasting, contains e.g. about 1 % of a specific type of hazardous waste, it may be assumed that the material blown off by abrasive blasting likewise includes 1 % of the specific type of hazardous waste.

On this background, a proportion of the specific hazardous type of waste in the contaminated product may also be calculated, and this proportion may be registered in the recording system.

If the proportion of the specific type of hazardous waste in the contaminated product is below a limit value stipulated by the authorities in relation to reuse of the blowing agent, the contaminated product may henceforth be classified in the recording system as reusable as blowing agent in a new blasting job.

The contaminated product is then used as blowing agent in a new blasting job, which substantially may be performed as described in the above in the present example.

Hereby substantial environmental benefits and cost savings are obtained as described in the above.

### Example 3

In the following, a detailed example of implementation in practice of the eighth to eleventh aspect of the present invention is described.

First, the blowing agent is produced in an automatized process by means of an allocation and mixing apparatus. A user selects a type and an amount of abrasive and tracer, respectively, and then the allocation and mixing apparatus supplies the selected amount of abrasive and tracer to a mixing chamber. In the present example, the blowing agent e.g. comprises approximately 95 percent by weight of abrasive in the form of quartz sand and approximately 5 percent by weight of tracer in the form of particulate aluminum silicate. In the mixing chamber, the abrasive and the tracer are mixed to yield a homogenous blowing agent, i.e. a blowing agent, wherein the tracer is distributed substantially homogenously in the abrasive.

Then the blowing agent is assigned and registered by reference to the type of tracer, to a specific blasting job, in an electronic recording system on a computer. In the recording system, the specific blasting job is assigned to the various hazardous waste materials, which, following an initial analysis of the front, is expected to occur in the job. Then the complete blowing agent is poured into a big bag or another suitable container, is provided with a label having a unique bar code assigned to the blowing agent in the recording system, and is transported to the construction site or the like, where it is to be used for abrasive blasting of a building part in the form of a building front.

At the construction site, the blowing agent is supplied to an abrasive blasting apparatus as described in the introduction above, and the front is treated by abrasive blasting with the abrasive supplied with compressed air as described in the above in an enclosed or sealed cabin covered by plastic and arranged for the purpose.

After the abrasive blasting has been performed by means of the abrasive blasting apparatus, the contaminated product, primarily consisting of the consumed blowing agent and the material blown off from the front of the building by abrasive blasting, is collected by aspiration with an aspirator and is kept again in a big bag, to which is applied a new label with another unique bar code assigned to the contaminated product in the recording system.

Then, a sample of approximately 10 cm³ is taken out from the contaminated product in a sample vessel for analysis. The sample vessel is provided with a label with the same bar code as on said big bag containing the contaminated product and is sent to a laboratory for analysis.

In the laboratory, part of the contaminated product is spread out on a microscope face. Then it is determined by visual inspection that the sample comprises the tracer aluminum silicate, and this is noted in the recording system. From the data in the recording system it can hence be unequivocally determined that the contaminated product in said big bag originates from the specific blasting job, and this is noted in the recording system.

As part of the same procedure, a counting of tracer particels in the contaminated product is performed by means of an optical analysis, viz. a visual counting under the microscope, and the amount of tracer in the sample is determined with reference to the known weight of the tracer particles in correlation with the weight of the sample.

From the amount of tracer in the sample the amount of blowing agent in the sample is then calculated with the aid of the assigned data in the register regarding the mixing rations of abrasive and tracer in the blowing agent.

On the basis of a simple calculation, the proportion of material in the sample blown off by abrasive blasting is then determined, whereupon the proportion of material blown off by abrasive blasting in the collected contaminated product may be readily calculated.

If said initial analysis shows that the surface of the front, which is expected to be treated by abrasive blasting, contains e.g. about 1 % of a specific type of hazardous waste, it may be assumed that the material blown off by abrasive blasting likewise includes 1 % of the specific type of hazardous waste.

On this background, a proportion of the specific hazardous type of waste in the contaminated product may also be calculated, and this proportion may be registered in the recording system.

If the proportion of the specific type of hazardous waste in the contaminated product is below a limit value stipulated by the authorities in relation to reuse of the blowing agent, the contaminated product may henceforth be classified in the recording system as reusable as blowing agent in a new blasting job.

The contaminated product is then used as blowing agent in a new blasting job, which substantially may be performed as described in the above in the present example.

Hereby substantial environmental benefits and cost savings are obtained as described in the above.

### Example 4

In the following, a detailed example of implementation in practice of a combination of the fourth to seventh aspect of the invention with the eighth to the eleventh aspect of the present invention is described.

First, the blowing agent is produced in an automatized process by means of an allocation and mixing apparatus. A user selects a type and an amount of abrasive, tracer and particulate markers, respectively, and then the allocation and mixing apparatus supplies the selected amount of abrasive, tracer and markers to a mixing chamber. In the present example, the blowing agent e.g. comprises approximately 95 percent by weight of abrasive in the form of quartz sand, 2.5 percent by weight of particulate aluminum silicate and approximately 2.5 percent by weight of particulate markers in form of laminar microparticles of plastic having a printed serial number in the form of ten digits. In the mixing chamber, the abrasive, the tracer and the markers are mixed to yield a homogenous blowing agent, i.e. a blowing agent, wherein the tracer and the markers are distributed substantially homogenously in the abrasive.

Then the blowing agent is assigned and registered by reference to the type of tracer and markers, to a specific blasting job, in an electronic recording system on a computer. In the recording system, the specific blasting job is assigned to the various hazardous waste materials, which, following an initial analysis of the front, is expected to occur in the job. Then the complete blowing agent is poured into a big bag or another suitable container, is provided with a label having a unique bar code assigned to the blowing agent in the recording system, and is transported to the construction site or the like, where it is to be used for abrasive blasting of a building part in the form of a building front.

At the construction site, the blowing agent is supplied to an abrasive blasting apparatus as described in the introduction above, and the front is treated by abrasive blasting with the abrasive supplied with compressed air as described in the above in an enclosed or sealed cabin covered by plastic and arranged for the purpose.

After the abrasive blasting has been performed by means of the abrasive blasting apparatus, the contaminated product, primarily consisting of the consumed blowing agent and the material blown off from the front of the building by abrasive blasting, is collected by aspiration with an aspirator and is kept again in a big bag, to which is applied a new label with another unique bar code assigned to the contaminated product in the recording system.

Then, a sample of approximately 10 cm³ is taken out from the contaminated product in a sample vessel for analysis. The sample vessel is provided with a label with the same bar code as on said big bag containing the contaminated product and is sent to a laboratory for analysis.

In the laboratory, part of the contaminated product is spread out on a microscope face. Then it is determined by visual inspection that the sample comprises the tracer aluminum silicate and the markers having the same ten-digit serial number as earlier recorded, and this is noted in the recording system. From the data in the recording system it can hence be unequivocally determined that the contaminated product in said big bag originates from the specific blasting job, and this is noted in the recording system.

As part of the same procedure, a counting of the tracer particles and the particulate markers in the contaminated product is performed by means of an optical analysis, viz. a visual counting under the microscope, and the amount of tracer particles and markers in the sample is determined with reference to the known weight of the tracer particles and the markers in correlation with the weight of the sample.

From the amount of tracer and markers in the sample, the amount of blowing agent in the sample is then calculated with the aid of the assigned data in the register regarding the mixing rations of abrasive, tracer and markers in the blowing agent.

On the basis of a simple calculation, the proportion of material in the sample blown off by abrasive blasting is then determined, whereupon the proportion of material blown off by abrasive blasting in the collected contaminated product may be readily calculated.

If said initial analysis shows that the surface of the front, which is expected to be treated by abrasive blasting, contains e.g. about 1 % of a specific type of hazardous waste, it may be assumed that the material blown off by abrasive blasting likewise includes 1 % of the specific type of hazardous waste.

On this background, a proportion of the specific hazardous type of waste in the contaminated product may also be calculated, and this proportion may be registered in the recording system.

If the proportion of the specific type of hazardous waste in the contaminated product is below a limit value stipulated by the authorities in relation to reuse of the blowing agent, the contaminated product may henceforth be classified in the recording system as reusable as blowing agent in a new blasting job.

The contaminated product is then used as blowing agent in a new blasting job, which substantially may be performed as described in the above in the present example.

Hereby, substantial environmental benefits and cost savings are obtained as described in the above.

### Example 5

In the following, a detailed example of implementation in practice of a combination of the first to third aspect with the fourth to seventh aspect of the invention and the eighth to the eleventh aspect of the present invention is described.

First, the blowing agent is produced as in Example 2, 3 or 4, and the blowing agent is then assigned and registered as in Example 2, 3 or 4 to a specific blasting job.

Hereafter, the tracing agent is produced as in Example 1, and then the tracing agent is assigned and registered as in Example 1.

Hereupon, the blowing agent is supplied to an abrasive blasting apparatus, after which the uppermost layer of the front is treated by abrasive blasting with the abrasive supplied with compressed air in an enclosed or sealed cabin covered by plastic and arranged for the purpose.

After the abrasive blasting has been performed by means of the abrasive blasting apparatus, the contaminated product, primarily consisting of the consumed blowing agent and the material blown off from the front of the building by abrasive blasting, is collected by aspiration with an aspirator and is kept again in a big bag, to which is applied a new label with another unique bar code assigned to the first contaminated product in the recording system.

Hereupon, the tracer is supplied to a paint sprayer, after which the tracing agent is sprayed onto the surface of the front treated by abrasive blasting. Then the front treated by abrasive blasting is torn down by the aid of a pneumatic hammer. After the tearing down by means of the pneumatic hammer has been completed, the second contaminated product, primarily consisting of material and residual material from the front and the tracing agent, is collected by aspiration with an aspirator and is kept in a big bag or another suitable container, to which is applied a new label with another unique bar code assigned to the second contaminated product in the recording system.

Then, a sample of approximately 10 cm³ is taken out from each contaminated product in a sample vessel for analysis. The sample vessel is provided with a label with the same bar code as on said big bags containing the corresponding contaminated products and is sent to a laboratory for analysis.

In the laboratory, part of the first contaminated product is spread out on a microscope face. Then, it is determined by visual inspection that the sample comprises the tracer olivine and the markers having the same twelve-digit serial number as earlier recorded, and this is noted in the recording system. From the data in the recording system it can hence be unequivocally determined that the first contaminated product in said big bag originates from the specific blasting job, and this is noted in the recording system.

As part of the same procedure, a counting of the tracer particles and/or the particulate markers in the first contaminated product is performed by means of an optical analysis, viz. a visual counting under the microscope, and the amount of tracer particles and markers in the sample is determined with reference to the known weight of the tracer particles and/or the particulate markers in correlation with the weight of the sample.

From the amount of tracer and markers in the sample, the amount of blowing agent in the sample is then calculated with the aid of the assigned data in the register regarding the mixing rations of abrasive, tracer and markers in the blowing agent.

On the basis of a simple calculation, the proportion of material in the sample blown off by abrasive blasting is then determined, whereupon the proportion of material blown off by abrasive blasting in the collected first contaminated product may be readily calculated.

If said initial analysis shows that the surface of the front to be treated by abrasive blasting contains e.g. about 1 % of a specific type of hazardous waste, it may be assumed that the material blown off by abrasive blasting likewise includes 1 % of the specific type of hazardous waste.

On this background, a proportion of the specific hazardous type of waste in the first contaminated product may also be calculated, and this proportion may be registered in the recording system.

If the proportion of the specific type of hazardous waste in the first contaminated product is below a limit value stipulated by the authorities in relation to reuse of the blowing agent, the first contaminated product may henceforth be classified in the recording system as reusable as blowing agent in a new blasting job.

The first contaminated product is then used as blowing agent in a new blasting job, which substantially may be performed as described in the above in the present example.

Hereafter, part of the second contaminated product is spread out on in the laboratory on a microscope face. In the same way as for the first contaminated product, it is determined by visual inspection that the sample comprises the tracer aluminum silicate and the markers having the same ten-digit serial number as earlier recorded, and this is noted in the recording system. From the data in the recording system it can hence be unequivocally determined that the second contaminated product in said big bag originates from the specific building demolition or renovation, and this is noted in the recording system.

If said initial analysis shows that the surface of the front expected to be torn down contains e.g. about 3 % of a specific type of hazardous waste, it may be assumed that the material blown off by abrasive blasting likewise includes 3 % of the specific type of hazardous waste.

On this background, a proportion of the specific hazardous type of waste in the second contaminated product may also be calculated, and this proportion may be registered in the recording system.

If the proportion of the specific type of hazardous waste in the second contaminated product is below a limit value stipulated by the authorities in relation to reuse of the blowing agent, the second contaminated product may henceforth be classified in the recording system as reusable as blowing agent in a new blasting job.

The second contaminated product is then used as blowing agent in a new blasting job, which substantially may be performed as described in the above in the present example.

Hereby, substantial environmental benefits and cost savings are obtained as described in the above.

### Experiments

In total, 16 experiments have been performed with an embodiment of the invention according to the eighth aspect of the invention.

Four different abrasives were admixed with a tracer in the form of 0,5 percent by weight of corundum as a tracer to provide a blowing agent according to the ninth aspect of the invention.

Four different blowing agents were prepared with four different abrasives, namely aluminum silicate, "quartz 1", "quartz 2" and "quartz 3". Quartz 1-3 had different particle sizes.

Hereafter, each blowing agent were used for abrasive blasting of four different building parts in the form of concrete gravel ("CG"), concrete marine rubble ("CM"), red brick ("RB") and a plastered face ("PF") in a closed cabin. Each item was treated with abrasive blasting with blowing agent corresponding to 8 kg/m². This resulted in 16 different contaminated products in total, each according to the tenth aspect of the invention. Hereupon, each contaminated product comprising the blown off material and spent abrasive was collected as far as possible.

Subsequently, a sample of 20 or 50 g was taken from each contaminated product for milling or sieving by means of an agate mortar method or a swing mill method as described below.

In the mortar method a sample of 20 g or 50 g was taken out and crushed in a cylinder in smaller portions approximately 5 times.

The sample is milled in an agate mortar in quite small portions, after which particles of a particle size exceeding 90 µm were screened off with a 90 µm sieve. This is a particle size, which is frequently applied in laboratory and microscopic investigations.

The fraction of the sample having a particle size exceeding 90 µm was treated again in the mortar, and the procedure continued, until a sieve residue of particles of a particle size exceeding 90 µm of 10 % ± 2 % was attained. Weighing was performed during operation in connection with sieving, until a sieve residue of 10 % ± 2 % of the weight of the sample was obtained. The sieve residue was not further used.

The resulting fraction of the sample of a grain size below 90 µm was washed (flushed) free from dust on a 63 µm sieve, and the resulting fraction of a particle size of 63-90 µm was dried and weighed.

In the swing mill method (only performed with quartz) a sample of 20 or 50 g was placed in the cleaned mill ring. The swing mill accommodated 2 samples a time, which were oppositely balanced. Experiment has shown that milling must be done in approximately 30 min. The sample holder was opened for all samples after 20 min, the sample was sifted on a 90 µm sieve, and the required supplementary milling period was assessed from experience. Milling, sieving and weighing went on, until the sieve residue on the 90 µm sieve was 10 % ± 2 %. The aggregate milling period amounted to approximately 30 min.

The fraction of the sampling having a particle size below 90 µm was washed through a 63 µm sieve, whereupon the resulting fraction of a particle size of 63-90 µm was dried and weighed.

Then an analysis was performed by means of quantitative microscopy as described below.

During the quantitative microscopy, a weight was carefully tared, and with a snap dispenser 0.6 ± 0.05 mg of a sample of the fraction of a particle size of 90-63 µm was placed on a microscope slide. With a dropping pipette 3 drops of immersion oil of a known refraction was added. The immersion oil filled up available space beneath the cover glass.

With regard to quartz blowing agent and aluminum silicate blowing agent, the refractive index of the immersion oil (index of refraction) was 1.54.

The employed corundum (AI203) showed a refractive index of 1.76. Due to the high refraction relatively to the immersion oil, corundum with a very clear relief was observed (of a mountain-like aspect and easy to see), whereas quartz is only visible through the polarization interference. Aluminum silicate is discernible by its light brown colour and the fact that it does not polarize light and has a low relief.

The 0.6 mg of sample material corresponded to 1000 ± 20 particles. This can be demonstrated partly by calculating the number of particles of a median extension of 77 µm having a weight of 0.6 mg, partly by counting the number present on the microscope slide, weighed in at 0.6 mg.

The microscope slide with the sample and immersion oil was subsequently placed under a polarization microscope mounted with a cross slide table (used for displacing the microscope slide in east-west trajectories during scanning), whereby it became possible to scan the entire expanse of the microscope slide for any corundum particles present. The number of corundum particles was counted and noted during the scanning. This was performed as described in the above by counting and noting (manually) each corundum particle identified in the sample aided by their distinct relief.

The result of the entire investigation comprising 16 experiments is shown in the below table.

| Sample | | | Sample weight | Fraction 63-90 µm | Sample weight abrasive | Spent abrasive | Weight of the building part prior to cleaning | Weight of the building part as cleaned | Al₂O₃ per 1000 particles |
|---|---|---|---|---|---|---|---|---|---|
| No. | Material | Abrasive | g | in g | kg | kg | kg | kg | |
| CG 1 | Concrete sand/gravel | Quartz 1 | 50.0 | 9.2 | 0.70 | 0.68 | Not measured | Not measured | 5 |
| CG 2 | Concrete sand/gravel | Quartz 2 | 50.0 | 9.8 | 0.70 | 0.68 | Not measured | Not measured | 7 |
| CG 3 | Concrete sand/gravel | Quartz 3 | 50.0 | 9.2 | 0.70 | 0.68 | Not measured | Not measured | 4 |
| CG 4* | Concrete sand/gravel | Aluminum silicate | 50.0 | 6.1 | 0.70 | 0.68 | Not measured | Not meas ured | 6 |
| CM 1 | Concrete marine rubble | Quartz 1 | 50.0 | 11.3 | 0.70 | 0.66 | Not measured | Not measured | 3 |
| CM 2* | Concrete marine rubble | Quartz 2 | 20.0 | 5.2 | 0.70 | 0.68 | Not meas-ured | Not meas-ured | 6 |
| CM 3 | Concrete marine rubble | Quartz 3 | 20.0 | 6.2 | 0.70 | 0.68 | Not measured | Not measured | 3 |
| CM 4* | Concrete marine rubble | Aluminum silicate | 20.0 | 2.1 | 0.70 | 0.68 | Not measured | Not measured | 7 |
| RB 1 | Red brick | Quartz 1 | 50.0 | 10.2 | 0.60 | 0.56 | Not measured | Not measured | 5 |
| RB 2 | Red brick | Quartz 2 | 50.0 | 10.5 | 0.60 | 0.58 | Not measured | Not measured | 6 |
| RB 3 | Red brick | Quartz 3 | 50.0 | 7.5 | 0.60 | 0.58 | Not measured | Not measured | 6 |
| RB 4* | Red brick | Aluminum silicate | 20.0 | 6.2 | 0.60 | 0.58 | Not measured | Not measured | 9 |
| PF 1 | Plastered face | Quartz 1 | 50.0 | 9.1 | 0.60 | 0.90 | 5.98 | 5.60 | 5 |
| PF 2 | Plastered face | Quartz 2 | 50.0 | 7.2 | 0.60 | 0.90 | 6.12 | 5.76 | 0 |
| PF 3 | Plastered face | Quartz 3 | 50.0 | 7.3 | 0.60 | 0.94 | 6.06 | 5.60 | 5 |
| PF 4* | Plastered face | Aluminum silicate | 20.0 | 5.4 | 0.60 | 0.88 | 6.30 | 5.92 | 4 |

| | | | | | | | | | |
|---|---|---|---|---|---|---|---|---|---|
| * samples crushed with mortar, remaining samples crushed in swing mill | | | | | | | | | |

Regarding sample no. PF 2, it was found, as opposed to all the other results, that no corundum was present in the sample. A repetition of the analyses yielded the same result, and probably a mistake has occurred, so that actually, no corundum tracer had been added. Thus, inadvertently a blind test has resulted.

The average number of particles for the series of the 15 samples (excluding PF 2) was 5.4 ± 1.5 per 1000 particles, which is satisfactorily close to the added amount of 5 ‰ corundum. Substantially the entire amount of added tracer was thus found to be traceable in the samples.

It is also noted that the increase of material in the contaminated product occurring in relation to cleaning of plaster from bricks did not affect the tracing of corundum. This may be due to the fact that a substantial part of said material was milled and washed out, as it was of a fine texture of less than 63 µm.

It made no difference whether an agate mortar or a swing mill was employed for crushing.

Finally, it made no difference whether the one or the other particle size distribution of quartz was employed.

## Claims

1. A method for tearing down and/or collecting and/or cleaning of a building part and/or a building material in connection with a specific building renovation and/or demolition, wherein said method comprises the following steps:
- providing a tracing agent, wherein the tracing agent comprises a quantity of tracer and/or a number of particulate markers, wherein the tracer, the case being, comprises a different material than the building part or the building material, and/or where the tracer, the case being, possesses at least one traceable physical property, which is different from the corresponding physical property of the building part or the building material, and wherein the particulate markers, the case being, are microparticles, each of which at a surface presents a code inscription or marking, which may be read visually, such as a serial number,
- applying the tracing agent to the building part and/or admixing the tracing agent into the building part,
- tearing down and/or collecting at least a part of the building part and/or cleaning a surface of the building part, whereby a contaminated product is produced, wherein the contaminated product comprises from 0.0001 to 10 percent by weight of the applied or admixed tracing agent as well as material or residual materials torn down, collected and/or cleaned from the building part, and
- assigning the contaminated product to said specific building renovation and/or demolition by means of a detection or reading of the tracing agent in the contaminated product.

2. A method according to claim 1, wherein the method comprises the additional step of establishing by the use of the tracing agent that at least a part of or a sample of the contaminated product originates from an assigned specific renovation work, and potentially determining an amount of, a type of, a content in and/or composition of the torn down, collected and/or cleaned material in the contaminated product by means of the assignment to the specific building renovation and/or building demolition.

3. A method according to claims 1 or 2, wherein the method comprises the step of assigning the tracing agent to the specific building renovation and/or building demolition, wherein said step potentially is performed prior to, during or following the step of tearing down and/or collecting and/or cleaning.

4. A method according to any one of the preceding claims, wherein the step of assigning the tracing agent to a specific building renovation and/or building demolition comprises booking and/or registering one or more materials present on and/or within the building part and/or building material to be torn down, collected and/or cleaned, and potentially further comprises determining and potentially booking and/or registering a quantitative content of one or more of said materials in said building part and/or building material.

5. A method according to any one of the previous claims, wherein the detection of the presence of the tracing agent in the contaminated product is performed by an analysis under a microscope or by means of a chemical identification or a measurement of radioactivity.

6. A method according to any one of the previous claims, wherein the contaminated product comprises:
at least 50 % material or residual material torn down, collected and/or cleaned from the building part, wherein at least a part of said material or residual material potentially is particulate, potentially having a particle size of 0.002 to 100 mm, and wherein said material or residual material further potentially comprises at least 50 percent by weight of said material or said residual material having a particle size of 0.002 to 100 mm, and/or
from 0.0001 to 10 percent by weight of the tracing agent admixed with material or residual material, which has been torn down, collected and/or cleaned from the building part, and/or which is provided on at least one surface of each of a number of particles of said material or residual material,
wherein the tracer, the case being, potentially comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond, and other minerals, fluorescent substances and DNA tracer, and/or wherein the tracer, the case being, is particulate and/or in fluid form,
and wherein the microparticles, the case being, comprise or substantially consist of a plastic material, and/or wherein the code inscription, the case being, is punched, printed, melted down or engraved into the surface of the microparticles, and/or wherein the code inscription, the case being, comprises one or more signs, digits, letters and/or symbols, and/or wherein the markers, the case being, are laminar, wherein the laminar shape preferably presents a maximum width or length comprised between 0.002 and 10 mm and/or a thickness of 0.002 to 10 mm.

7. A method according to any one of the preceding claims, wherein the tracing agent is applied or admixed by spraying the tracing agent onto the building part and/or the building material and/or by manual application, e.g. with paint roller and/or brush, e.g. onto a surface of the building component, and/or a manual pouring and/or application and/or admixing e.g. in particulate building material.

8. A method according to any one of the preceding claims, wherein the trace agent is mixed with a particulate material, such as quartz sand, which subsequently is mixed with the building part and/or the material and/or the residual material.

9. A contaminated product, which may be provided by means of the method according to one of the preceding claims, wherein the contaminated product comprises at least 80 % of residues from and/or waste from one or more building materials, wherein at least a proportion of said residues or waste is particulate, having a particle size of 0.002 to 100 mm, and wherein said residues or waste comprises at least 50 percent by weight of the residues or waste having a particle size of 0.002 to 100 mm, and
from 0.0001 to 10 percent by weight of a tracing agent, which is mixed into said residues or waste, and/or which is provided on at least one surface of each of a number of particles of the residues or the waste, wherein the tracing agent comprises an amount of tracer and/or a number of particulate markers, wherein the tracer, the case being, comprises a different material than the building part or the building material, and/or wherein the tracer, the case being, has at least one traceable physical property, which is different from the corresponding physical property of the building part or the building material, wherein the tracer further comprises or substantially consists of one or more of the substances selected from the group consisting of radioactive isotopes, ceramics, glass, dye, aluminum silicate, flint, quartz, cristobalite, olivine, garnet, corundum, spinel, silicon carbide, diamond, and other minerals, fluorescent substances and DNA tracer, and wherein the particulate markers, the case being, are microparticles, each of which on a surface presents a code inscription or marking, which is visually readable, such as a serial number, wherein the microparticles, the case being, further comprises or substantially consists of a plastic material.

10. Use or reuse of the contaminated product according to claim 9 for production of a building part or a building material, wherein the contaminated product makes up a part of the produced building part or building material.
